# EUROPÄISCHE PATENTSCHRIFT

(11) **EP 3 625 082 B1**
(45) Veröffentlichungstag und Bekanntmachung des Hinweises auf die Patenterteilung: **07.07.2021**
(21) Anmeldenummer: 18725475.0
(22) Anmeldetag: 16.05.2018
(51) Int. Cl.: B60N 2/02, B60N 2/07, B60N 3/00, B60R 16/027

(54) **FAHRZEUGEINRICHTUNGSSYSTEM**
VEHICLE DEVICE SYSTEM
SYSTÈME DE DISPOSITIF DE VÉHICULE

(30) Priorität: 18.05.2017 DE 102017208446
(43) Veröffentlichungstag der Anmeldung: 25.03.2020
(73) Patentinhaber: Volkswagen Aktiengesellschaft, 38440 Wolfsburg (DE)
(72) Erfinder: BORK, Simon, 38547 Calberlah (DE); ALISCH, Sebastian, 38112 Braunschweig (DE)
(86) Internationale Anmeldenummer: PCT/EP2018/062662
(87) Internationale Veröffentlichungsnummer: WO 2018/210905

(56) Entgegenhaltungen:
- EP-A2- 2 298 609
- DE-C1- 19 644 219

## Beschreibung

Die Erfindung betrifft ein Fahrzeugeinrichtungssystem für ein Kraftfahrzeug, mit zumindest einer Fahrzeugeinrichtung, insbesondere Fahrzeugsitz oder Fahrzeugtisch, und mit einer an einer Fahrzeugkarosserie befestigten oder befestigbaren Halterung zum lösbaren Arretieren der Fahrzeugeinrichtung an der Fahrzeugkarosserie und mit einem Schlüsselschalter, der in Abhängigkeit seiner Schaltposition zumindest einen elektrischen Kontakt zwischen der Fahrzeugeinrichtung und dem Kraftfahrzeug herstellt oder unterbricht.

Fahrzeugeinrichtungssysteme der eingangs genannten Art sind aus dem Stand der Technik bereits bekannt. So offenbart beispielsweise die Offenlegungsschrift DE 196 44 219 C1 ein Fahrzeugsitz, der an einer Sitzhalterung lösbar befestigt ist. Dazu ist ein Schlüsselschalter vorgesehen, der in Abhängigkeit der Drehstellung eines Schließzylinders den Fahrzeugsitz freigibt oder an der Sitzhalterung arretiert. Der Schlüsselschalter ist dabei dazu ausgebildet, dass er nur von dem Zündschlüssel betätigt werden kann, der mit dem Zündschloss des Kraftfahrzeugs zusammenwirkt. Dadurch ist sichergestellt, dass der Fahrzeugsitz nur dann gelöst werden kann, wenn die Zündung auf "null" geschaltet ist, und sich somit das Kraftfahrzeug in einem sicheren Betriebszustand befindet. Die offenbarte Lösung hat den Nachteil, dass der Schlüsselschalter karosseriefest der Sitzlagerung zugeordnet ist und dadurch einen entsprechenden Bauraum neben dem Fahrzeugsitz im Kraftfahrzeuginnenraum beansprucht. Mit der zunehmenden Komplexität der Sitzlagerungen, welche eine Höhenverstellung, Längsverstellung und gegebenenfalls auch Verdrehung des Fahrzeugsitzes um eine Hochachse erlauben sollen, ist jedoch der Bauraum im Bereich der Sitzhalterung eng bemessen. Ein gattungsgemäßes Fahrzeugeinrichtungssystem ist ebenfalls in der Offenlegungsschrift EP 2 298 609 A2 offenbart.

Der Erfindung liegt daher die Aufgabe zugrunde, ein Fahrzeugeinrichtungssystem zu schaffen, welches eine verbesserte Bauraumausnutzung und Funktionsvielfalt bietet, ohne dabei zu einer bemerkenswerten Kostenerhöhung zu führen.

Die der Erfindung zugrundeliegende Aufgabe wird durch ein Fahrzeugeinrichtungssystem mit den Merkmalen des Anspruchs 1 gelöst. Dieses hat den Vorteil, dass der Schlüsselschalter der Fahrzeugeinrichtung zugeordnet und damit mit der Fahrzeugeinrichtung mitbewegbar ist. Damit wird Bauraum im Bereich der Fahrzeugeinrichtung beansprucht und im Bereich der Halterung freigeben, wodurch sich insgesamt eine Optimierung der Bauraumausnutzung ergibt. Der Schlüsselschalter ist dazu erfindungsgemäß längsverschieblich an der an der Halterung gelagerten/lagerbaren Fahrzeugeinrichtung befestigt und wirkt mit einem Kontaktschlitten zusammen, der längsverschieblich an der beziehungsweise durch die Halterung, insbesondere Sitzhalterung und/oder Tischhalterung gelagert ist. Dadurch, dass der Schlüsselschalter mit einem längsverschieblichen Kontaktschlitten zusammenwirkt, ist das Herstellen des elektrischen Kontakts zwischen Fahrzeugeinrichtung und Kraftfahrzeug unabhängig von der Längsschiebestellung der Fahrzeugeinrichtung an der Halterung gewährleistet. Dadurch, dass der Kontaktschlitten längsverschieblich an der Sitzhalterung gelagert ist, ist er mit der Fahrzeughalterung mitbewegbar, sodass eine elektrische Kontaktschnittstelle zwischen Fahrzeugeinrichtung beziehungsweise Schlüsselschalter und Kraftfahrzeug beziehungsweise Halterung mit der Fahrzeugeinrichtung mitbewegbar ist und daher unabhängig von der Längsschiebestellung der Fahrzeugeinrichtung vorliegt. Bevorzugt handelt es sich bei der Fahrzeugeinrichtung um einen Fahrzeugsitz oder einen Fahrzeugtisch, die beide längsverschiebbar durch die Halterung in dem Kraftfahrzeug gelagert oder lagerbar sind. Die Halterung ist dabei bevorzugt entsprechend als Sitzhalterung oder Tischhalterung ausgebildet, wie oben bereits erwähnt. Besonders bevorzugt ist die Halterung als Sitzhalterung und Tischhalterung ausgebildet, sodass an der Halterung wahlweise ein Fahrzeugsitz oder ein Fahrzeugtisch längsverschieblich anordenbar sind, sodass dem Benutzer ein hoher Gestaltungsfreiraum zur Verwendung der Halterung zur Verfügung steht.

Weiterhin ist bevorzugt vorgesehen, dass die Halterung eine Längsführung zum Längsverschieben der Fahrzeugeinrichtung beziehungsweise des Fahrzeugsitzes oder des Fahrzeugtischs sowie eine Führungsschiene, die sich parallel zur Längsführung erstreckt und den Kontaktschlitten längsverschieblich trägt, aufweist. Durch die parallele Anordnung von Längsführung und Führungsschiene ist gewährleistet, dass der elektrische Kontakt über den gesamten Schiebebereich der Fahrzeugeinrichtung auf der Halterung gewährleistbar ist, insbesondere ohne dass eine Relativbewegung zwischen der Fahrzeugeinrichtung und dem Kontaktschlitten quer zur Längsrichtung erfolgen kann. Insbesondere dann, wenn der elektrische Kontakt durch einen Berührungskontakt hergestellt wird, ist eine Aufrechterhaltung des elektrischen Kontakts durch die Parallelführung sicher gewährleistet.

Gemäß einer bevorzugten Weiterbildung der Erfindung ist vorgesehen, dass die Führungsschiene eine im Querschnitt C-förmig ausgebildete Führungsnut aufweist, und dass der Kontaktschlitten ein T-förmiges und in der Führungsnut gehaltenes Führungsprofil aufweist. Durch die C-förmige Ausbildung der Führungsnut und die T-förmige Ausbildung des Kontaktschlittens am Führungsprofil wird erreicht, dass der Kontaktschlitten formschlüssig in der Führungsnut verliersicher gehalten ist, zumindest in der Richtung quer zur Schieberichtung. Die Führungsnut ist zumindest an einem Längsende randoffen ausgebildet, sodass der Kontaktschlitten in Schieberichtung in die Führungsnut einschiebbar oder aus dieser herausnehmbar ist.

Der Schlüsselschalter weist erfindungsgemäß einen Schließzylinder auf, der mechanisch mit einem Arretierhebel verbunden und zumindest durch eine Drehbewegung des Schließzylinders in Eingriff oder Außereingriff mit dem Kontaktschlitten bringbar ist. Durch ein Betätigen des Schlüsselschalters mittels des dazugehörigen passenden Schlüssels ist der Schließzylinder drehbar und dadurch der Arretierhebel verlagerbar, insbesondere verschwenkbar. Der Arretierhebel weist zweckmäßigerweise ein Sperrmittel, insbesondere einen Mitnahmevorsprung, auf, das insbesondere an dem vom Schließzylinder abgewandten Ende des Arretierhebels angeordnet oder ausgebildet ist, um in zumindest einer Drehstellung des Schließzylinders formschlüssig mit dem Kontaktschlitten derart zusammenwirken, dass eine Längsbewegung der Fahrzeugeinrichtung relativ zu der Sitzhalterung auf den Kontaktschlitten übertragen und der Kontaktschlitten dadurch in der Führungsnut mitgenommen wird. In einer zweiten Drehstellung oder Schaltstellung ist das Sperrmittel außereingriff mit dem Kontaktschlitten gebracht, sodass sich die Fahrzeugeinrichtung unabhängig von dem Kontaktschlitten verschieben lässt, um beispielsweise die Fahrzeugeinrichtung von der Sitzhalterung zu entfernen.

Weiterhin sind der Arretierhebel und/oder der Schließzylinder für das in Eingriff- oder außer Eingriff bringen axial - bezogen auf die Drehachse des Schließzylinders - verschiebbar. Dadurch ist das Mitnahmemittel durch eine axiale beziehungsweise eine Längsbewegung quer zur Schieberichtung des Kontaktschlittens und/oder der Fahrzeugeinrichtung formschlüssig mit dem Kontaktschlitten wirkverbindbar. Dazu weist der Kontaktschlitten bevorzugt eine Aufnahmeaussparung auf, in welche das Mitnahmemittel, das beispielsweise als Mitnahmebolzen oder -Pin ausgebildet ist, durch die Axialbewegung einschiebbar oder herausziehbar ist. Die Axialbewegung kann zusätzlich oder alternativ zu der Schwenkbewegung für die Wirkverbindung mit dem Kontaktschlitten ursächlich sein.

Weiterhin weist die Fahrzeugeinrichtung erfindungsgemäß einen Träger auf, an welchem der Schließzylinder und der Arretierhebel gelagert sind. Der Träger ist vorteilhafterweise fest mit der Fahrzeugeinrichtung oder auch als Träger der Fahrzeugeinrichtung ausgebildet. Dabei ist der Träger insbesondere dem Sitzteil der Fahrzeugeinrichtung zugeordnet. Bevorzugt ist der Träger als mit der Längsführung zusammenwirkendes Führungselement ausgebildet.

Erfindungsgemäß ist vorgesehen, dass an dem Führungselement und/oder an dem Arretierhebel ein oder mehrere elektrische Berührungskontaktstellen angeordnet und mit einer oder mehreren elektrischen Einrichtungen der Fahrzeugeinrichtung elektrisch verbunden sind. Die Berührungskontaktstellen dienen zur elektrischen Kontaktierung der elektrischen Einrichtung oder Einrichtungen der Fahrzeugeinrichtung, sodass die elektrischen Einrichtungen bei der Montage der Fahrzeugeinrichtung an der Halterung einfach durch den Berührungskontakt elektrisch mit beispielsweise einem Steuergerät des Kraftfahrzeugs oder einer Energiequelle des Kraftfahrzeugs verbindbar sind, um die Einrichtung oder Einrichtungen zu betreiben. Bei den Berührungskontaktstellen handelt es sich insbesondere um elektrisch leitfähige Kontaktplättchen oder Kontaktpins, die fest oder federnd an dem Träger und/oder Arretierhebel gelagert sind, um eine dauerhaft sichere elektrische Berührungskontaktierung zu gewährleisten.

Weiterhin weist der Kontaktschlitten erfindungsgemäß ein oder mehrere Gegenberührungskontaktelemente auf, die elektrisch mit einem Steuergerät und/oder einer elektrischen Spannungsversorgung des Kraftfahrzeugs verbunden oder verbindbar sind und in zumindest einer Schaltstellung des Schlüsselschalters in elektrischem Berührungskontakt mit zumindest einem der Berührungskontaktelemente an dem Träger und/oder dem Arretierhebel stehen. Die elektrische Kontaktierung der Fahrzeugeinrichtung erfolgt somit über die am Kontaktschlitten angeordneten Gegenberührungskontaktelemente, die durch ihre Anordnung in dem Kontaktschlitten mit dem Kontaktschlitten mitbewegbar sind, sodass dann darauf der elektrische Kontakt zu der Fahrzeugeinrichtung durch den Kontaktschlitten gewährleistet ist. Der Berührungskontakt ist dabei gemäß einer ersten Ausführungsform bevorzugt unabhängig von der Schaltstellung des Schlüsselschalters, sodass der Berührungskontakt in beiden oder mehreren Schaltstellungen des Schlüsselschalters besteht. In diesem Fall dient der Schlüsselschalter allein zur mechanischen Verbindung von Kontaktschlitten und Fahrzeugeinrichtung. Alternativ ist gemäß einer weiteren Ausführungsform bevorzugt vorgesehen, dass der elektrische Kontakt in zumindest einer zweiten Schaltstellung des Schlüsselschalters gelöst beziehungsweise unterbrochen ist, sodass in einfacher Art und Weise elektrisch prüfbar ist, ob die Fahrzeugeinrichtung vorgabegemäß an der Sitzhalterung durch Betätigen des Schlüsselschalters befestigt beziehungsweise arretiert wurde. Zumindest eine Kontaktstelle ist damit bevorzugt dazu ausgebildet, die erste Schaltstellung (geschlossene Schaltstellung) des Schlüsselschalters elektrisch zu erfassen.

Damit die Gegenberührungskontakte des Kontaktschlittens elektrisch mit dem fahrzeugseitigen Steuergerät und/oder dem Energiespeicher dauerverbunden sind, ist dem Kontaktschlitten bevorzugt eine Schleppkette, ein Aufwickelsystem und/oder ein flexibles Leiterband für elektrische Leiter, die die Gegenberührungskontakte mit dem Steuergerät und/oder der Spannungsversorgung verbindet, zugeordnet. Durch Schleppkette, Aufwickelsystem und/oder flexibles Leiterband ist eine einfache und belastungsfreie Führung und Nachführung der elektrischen Leiter zur elektrischen Kontaktierung der Gegenberührungskontakte des Kontaktschlitten gewährleistet. Dabei ist das eine Ende der Schleppkette oder des Leiterbands dem Kontaktschlitten und das andere Ende der Halterung und/oder dem fahrzeugseitigen Steuergerät zugeordnet.

Die Fahrzeugeinrichtung weist bevorzugt als elektrische Einrichtung ein Steuergerät, eine Sitzheizung, eine Sitzlüftung, eine Sitzkühlung, einen Sitzbelegungssensor, eine Gurtstraffer-Einrichtung, eine Sitzverstelleinrichtung, insbesondere mit Memory-Funktion, ein Gurtschloss, einen Stromanschluss, insbesondere Steckdose/Ladebuchse, ein Unterhaltungssystem, Bedienungsschalter, eine Massageeinrichtung und/oder eine Airbag-Einrichtung auf. Durch die vorteilhafte Kontaktstellen des Schlüsselschalters mit dem Kontaktschlitten sind die unterschiedlichen Einrichtungen individuell durch das fahrzeugseitige Steuergerät betätigbar beziehungsweise ansteuerbar, um die der Fahrzeugeinrichtung zugeordneten Einrichtungen individuell zu betätigen und den Komfort oder die Sicherheit für den Benutzer zu optimieren. Die zuvor genannten Einrichtungen sind insbesondere vollständig oder teilweise bei dem Fahrzeugsitz vorgesehen. Bei einer Ausbildung der Fahrzeugeinrichtung als Fahrzeugtisch, sind insbesondere als elektrische Einrichtung eine Steckdose/Ladebuchse, beispielsweise ein USB-Anschluss, ein integrierter Kühlschrank, eine Kaffeemaschine oder andere elektrische Verbraucher, vorzugsweise aus dem Camping-Bereich, vorhanden.

Weiterhin ist bevorzugt vorgesehen, dass zumindest einer der Berührungskontakte oder Gegenberührungskontakte federnd gelagert ist. Insbesondere ist der jeweilige Berührungskontakt oder Gegenberührungskontakt entgegen der Berührungskontaktwirkrichtung federnd gelagert, sodass beim Aufeinandertreffen von Berührungskontakt und Gegenberührungskontakt zumindest einer von beiden zurückweichen kann. Durch die dabei entstehende Feder-Vorspannung ist gewährleistet, dass auch beim Auftreten von Vibrationen der elektrisch leitfähige Berührungskontakt dauerhaft aufrecht erhalten bleibt. Optional sind der jeweilige Berührungskontakt und/oder Gegenberührungskontakt außerdem durch eine vorteilhafte Oberflächenbeschaffenheit und/oder ein vorteilhaftes Oberflächenprofil in Bezug auf die elektrische Kontaktierung optimiert, beispielsweise durch Vorsehen von einer vorbestimmten Oberflächenrauigkeit oder beispielsweise Kontaktnoppen.

Gemäß einer bevorzugten Weiterbildung der Erfindung ist vorgesehen, dass das kraftfahrzeugseitige Steuergerät dazu hergerichtet ist, eine erfolgte elektrische beziehungsweise korrekte Kontaktierung der einen oder mehreren Einrichtungen der Fahrzeugeinrichtung festzustellen. Damit ist eine Sicherstellung der Kontaktierung einfach ermöglicht. Dazu ist das Steuergerät beispielsweise dazu ausgebildet, elektrische Tests durchzuführen, mittels derer sichergestellt werden kann, dass eine elektrische Kontaktierung aller Einrichtungen sicher erfolgt ist.

Weiterhin ist bevorzugt vorgesehen, dass der Kontaktschlitten zumindest einen Mikroschalter aufweist, der durch den Schlüsselschalter betätigbar und mit dem Steuergerät (fahrzeugseitig) verbunden ist. Durch das Betätigen des Mikroschalters durch den Schlüsselschalter ist auf einfache und vorteilhafte Weise feststellbar, ob der Schlüsselschalter korrekt betätigt wurde.

Im Folgenden soll die Erfindung anhand der Zeichnung näher erläutert werden. Dazu zeigen
- Figur 1: ein Fahrzeugsitzsystem in einer vereinfachten perspektivischen Darstellung,
- Figur 2: eine erste Detailschnittdarstellung des Fahrzeugsitzsystems und
- Figur 3: eine zweite Detailschnittdarstellung des Fahrzeugsitzsystems.

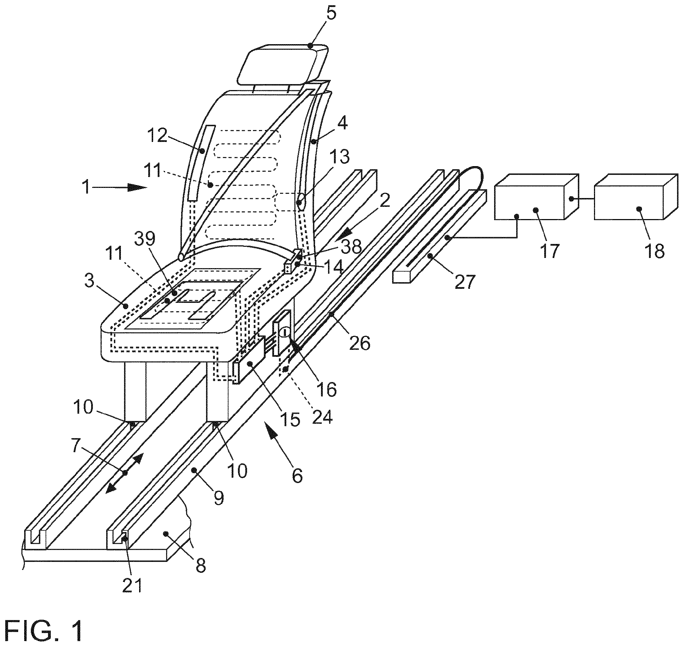

Figur 1 zeigt in einer vereinfachten perspektivischen Darstellung ein Fahrzeugsitzsystem 1 für ein Kraftfahrzeug mit einer Fahrzeugeinrichtung, vorliegend einem Fahrzeugsitz 2, der ein Sitzteil 3 und eine daran verschwenkbar angeordnete Rückenlehne 4 mit einer Kopfstütze 5 aufweist, sowie eine Halterung 6, die eine längsverschiebliche Lagerung, durch einen Doppelpfeil 7 angezeigt, des Fahrzeugsitzes 2 an der Fahrzeugkarosserie 8 des Kraftfahrzeugs erlaubt. Die Halterung 6 ist insoweit in dem vorliegenden Ausführungsbeispiel als Sitzhalterung ausgebildet.

Die Halterung 6 weist dazu zwei parallel zueinander ausgerichtete Längsführungen 9 auf, die in der Art von Schienenführungen ausgebildet sind. Der Fahrzeugsitz 2 ist mit dem Sitzteil 3 auf den Längsführungen 9 längsverschieblich montiert/montierbar. Dazu sind die Längsführungen 9 beispielsweise als Schienen mit Längsnuten ausgebildet, in welche das Sitzteil 3 mit Führungselementen 10 einsetzbar ist. Der Fahrzeugsitz 2 kann dabei in mehreren Schiebepositionen entlang der Längsführungen 9 arretiert beziehungsweise gehalten werden, wobei hierzu beispielsweise bekannte Rastsysteme benutzt werden können.

Der Fahrzeugsitz 2 weist mehrere elektrische Einrichtungen auf, wie beispielsweise eine Sitzheizung 11, eine Airbag-Einrichtung 12, einen ansteuerbaren Gurtstraffer 13, einen Gurtschlosssensor 14 sowie ein Steuergerät 15. Optional kann der Fahrzeugsitz 2 auch eine Sitzkühlung, Sitzlüftung ein Gurtschloss 38 und/oder einen Sitzbelegungssensor 39 aufweisen. Vorliegend ist das Steuergerät 15 dabei mit den anderen Einrichtungen durch elektrische Verkabelung verbunden, um diese bei Bedarf anzusteuern oder Signale dieser zu empfangen und auszuwerten. An dem Fahrzeugsitz 2 ist außerdem ein Schlüsselschalter 16 angeordnet. Mittels des Schlüsselschalters 16 ist eine elektrische Verbindung von dem Steuergerät 15 zu einem fahrzeugseitigen Steuergerät 17 herstellbar, das mit elektrischen Einrichtungen des Kraftfahrzeugs, wie beispielsweise mit einem Airbag-Steuergerät 18, einem Energiespeicher oder dergleichen über weitere elektrische Leitungen verbunden ist. Der Schlüsselschalter 16 weist dazu zwei verschiedene Schalt- oder Drehstellungen auf, wobei in der ersten Drehstellung eine elektrische Verbindung hergestellt und in der zweiten Drehstellung die elektrische Verbindung unterbrochen beziehungsweise gelöst ist.

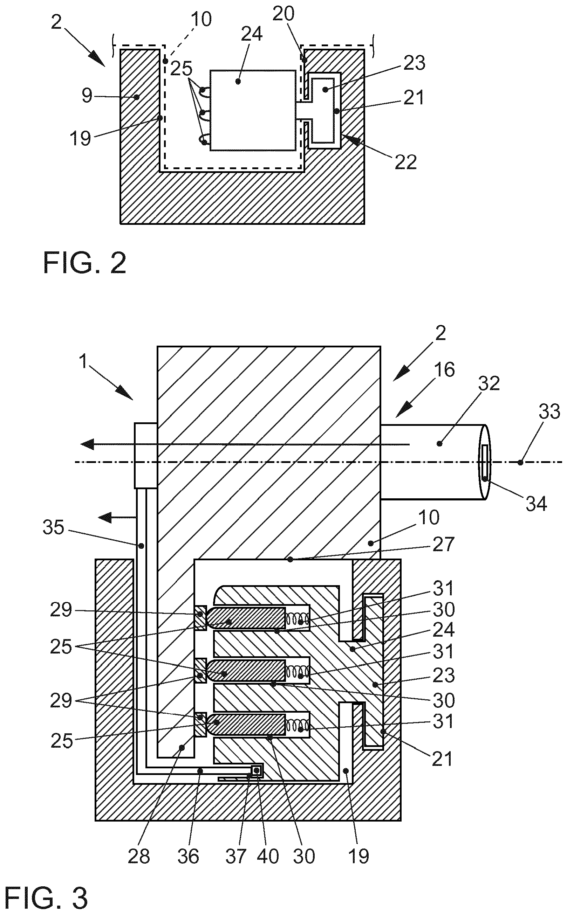

Figur 2 zeigt dazu in einer vereinfachten Darstellung des Fahrzeugsitzsystems 1 eine der Längsführungen 9 der Sitzhalterung 6. Die Führungsnut 19 in der jeweiligen Längsführung 9 ist U-förmig ausgebildet. An einer der einander gegenüberliegenden Seitenwände 20 der Führungsnut 19 ist eine weitere Führungsnut 21 ausgebildet, die einen C-förmigen Querschnitt aufweist. Dadurch, dass die Führungsnut 21 in die Seitenwand 20 der Längsführungen 9 integriert ist, bildet sie eine sich parallel zur Längsführung 9 erstreckende Führungsschiene 22. In der Führungsnut 21 liegt ein T-förmiges Profil 23 eines Kontaktschlittens 24 längsverschieblich gelagert ein. Der Kontaktschlitten 24 steht in den Innenraum der Führungsnut 19 vor und weist an seiner von der Seitenwand 20 abgewandten Seite mehrere Gegenberührungskontaktelemente 25 auf. Die Gegenberührungskontaktelemente 25 sind als elektrisch leitfähige Kontaktpins oder Kontakt-Plättchen ausgebildet und durch elektrische Leitungen mit dem fahrzeugseitigen Steuergerät 17 verbunden. Dazu ist dem Kontaktschlitten 24 ein flexibles Leitungsband 26 mit mehreren elektrischen Leitern zugeordnet, das anderendig mit dem Steuergerät 17 oder einem Verteiler 27 verbunden ist. Anstelle eines flexiblen Leitungsbands können auch einzelne Leiter mithilfe einer Schleppkette oder eines Aufwickelsystems vorhanden sein.

Figur 3 zeigt in einer weiteren Detailschnittdarstellung die Längsführung 9 mit dem darin angeordneten Fahrzeugsitz 2. An zumindest einem der Führungselemente 10 ist eine Aussparung 27 zur Aufnahme des Kontaktschlittens 24 ausgebildet, sodass ein Vorsprung 28 verbleibt, der an dem Kontaktschlitten 24 vorbei in Richtung des Bodens der Führungsnut 19 führt.

An dem Vorsprung 28 sind mehrere elektrisch leitfähige Kontaktelemente 29 angeordnet, sodass sie den Gegenkontaktelementen 25 gegenüberliegen, wenn sich der Kontaktschlitten 24 auf Höhe des Vorsprungs 28 befindet, in Längsschieberichtung gemäß Doppelpfeil 7 gesehen. Gemäß dem in Figur 3 dargestellten vorteilhaften Ausführungsbeispiel sind die Gegenkontaktelemente 25 in jeweils einer Aussparung 30 des Kontaktschlittens 24 längsverschieblich gelagert, wobei sie entgegen der Kraft jeweils eines Federelements 31 in die Aussparung 30 hineindringbar sind. Durch die Federelemente 31 werden somit die Gegenkontaktelemente 25 in Richtung der Kontaktelemente 29 gedrängt, sodass ein dauerhafter elektrischer Berührungskontakt gewährleistet ist. Durch diese Kontaktstellen erfolgt die elektrische Verbindung von dem Steuergerät 17 zum dem Steuergerät 15 in einfacher Art und Weise.

Der Schlüsselschalter 16 weist einen Schließzylinder 32 auf, der um eine Drehachse 33 drehbar ist, wenn der dafür vorgesehene Schlüssel in die Schlüsselaufnahme 34 des Schließzylinders 32 eingeführt ist. Insbesondere ist der Schließzylinder 32 dazu ausgebildet, dass er nur dann gedreht werden kann, wenn der Zündschlüssel des Kraftfahrzeugs in die Schlüsselöffnung 34 korrekt eingeführt ist. An dem der Schlüsselöffnung 34 abgewandten Ende ist der Schließzylinder 32 mit einem Arretierhebel 35 mechanisch verbunden, der an dem von dem Schließzylinder 32 abgewandten Ende einen Mitnahmevorsprung 36 aufweist, der sich insbesondere parallel zur Drehachse 33 in Richtung der Schlüsselöffnung 34 erstreckt. Wird der Schließzylinder 32 um die Drehachse 33 gedreht, so wird der Arretierhebel 35 mitgeschwenkt. Dadurch kann er in Eingriff oder Außereingriff mit dem Kontaktschlitten 34 gebracht werden, indem der Mitnahmevorsprung 36 in eine Aufnahmeöffnung 37 des Kontaktschlittens 24 hineingeschwenkt oder aus dieser herausgeschwenkt wird.

Bevorzugt ist vorgesehen, dass der Schließzylinder 32 und der Arretierhebel 35 auch axial, also in Richtung der Drehachse 33, verschiebbar gelagert sind, sodass sich eine kombinierte Dreh- und Schwenkbewegung der Mitnahmevorsprung 36 in die Aufnahme 37 einführbar und aus dieser herausnehmbar ist. Insbesondere durch die axiale Verschiebung ergibt sich, dass der Mitnahmevorsprung 36 seitlich in die Aussparung 37 einführbar ist und dadurch eine formschlüssige Verbindung in beide Schieberichtungen gemäß Doppelpfeil 7 mit dem Kontaktschlitten 24 zusammenwirkt, sodass bei einer Bewegung des Fahrzeugsitzes 2 der Kontaktschlitten 24 stets mitgenommen beziehungsweise mitgeschoben wird, sodass der elektrische Berührungskontakt stets erhalten bleibt.

Optional ist in der Aussparung 37 außerdem ein Mikroschalter 40 angeordnet, der durch den Mitnahmevorsprung 36 betätigbar ist beziehungsweise betätigt wird, wenn der Arretierhebel 35 mit dem Mitnahmevorsprung 36 in die Aussparung 37 eingeführt wird. Der Mikroschalter 40 ist elektrisch mit dem Steuergerät 17 verbunden, welches in Abhängigkeit von der Betätigung des Mikroschalters 40 das korrekte Kontaktieren beziehungsweise Betätigen des Schlüsselschalters 16 erkennt.

Wird der Schlüsselschalter 16 durch Einführen des passendes Zündschlüssels in die Schlüsselöffnung 34 in eine nicht gezeigte zweite Schaltstellung bewegt, sodass der Mitnahmevorsprung 36 außereingriff mit dem Kontaktschlitten 24 gelangt, so wird der Fahrzeugsitz 2 unabhängig vom Kontaktschlitten 24 bewegt und kann beispielsweise von der Sitzhalterung 6 entfernt werden.

Mittels des Schlüsselschalters 16 ist somit eine einfache elektrische Verbindung zwischen Fahrzeugsitz 2 und kraftfahrzeugseitiger Elektronik herstellbar. Darüber hinaus kann direkt durch die elektrische Verbindung geprüft werden, ob der Fahrzeugsitz 2 korrekt montiert und der Schlüsselschalter 16 in die richtige Schaltstellung bewegt wurde. Dadurch ergibt sich der Vorteil, dass beispielsweise ein Fahrzeugstart unterbunden werden kann, wenn festgestellt wird, dass der Fahrzeugsitz 2 nicht korrekt montiert und insbesondere nicht die elektrische Verbindung hergestellt wurde.

**Bezugszeichenliste**

| | | | |
|---|---|---|---|
| 1 | Fahrzeugsitzsystem | 37 | Aufnahmeöffnung |
| 2 | Fahrzeugsitz | 38 | Gurtschloss |
| 3 | Sitzteil | 39 | Sitzbelegungssensor |
| 4 | Rückenlehne | 40 | Mikroschalter |
| 5 | Kopfstütze | | |
| 6 | Sitzhalterung | | |
| 7 | Doppelpfeil | | |
| 8 | Karosserie | | |
| 9 | Längsführung | | |
| 10 | Führungselement | | |
| 11 | Sitzheizung | | |
| 12 | Airbag-Einrichtung | | |
| 13 | Gurtstraffer | | |
| 14 | Gurtschlosssensor | | |
| 15 | Steuergerät | | |
| 16 | Schlüsselschalter | | |
| 17 | Steuergerät | | |
| 18 | Airbag-Steuergerät | | |
| 19 | Führungsnut | | |
| 20 | Seitenwand | | |
| 21 | Führungsnut | | |
| 22 | Führungsschiene | | |
| 23 | Führungsprofil | | |
| 24 | Kontaktschlitten | | |
| 25 | Gegenberührungskontaktelement | | |
| 26 | Leiterband | | |
| 27 | Verteiler | | |
| 28 | Vorsprung | | |
| 29 | Berührungskontaktelement | | |
| 30 | Aussparung | | |
| 31 | Federelement | | |
| 32 | Schließzylinder | | |
| 33 | Drehachse | | |
| 34 | Schlüsselöffnung | | |
| 35 | Arretierhebel | | |
| 36 | Mitnahmevorsprung | | |

## Patentansprüche

1. Fahrzeugeinrichtungssystem (1) für ein Kraftfahrzeug, mit zumindest einer Fahrzeugeinrichtung, insbesondere Fahrzeugsitz (2) oder Fahrzeugtisch, und mit einer an einer Fahrzeugkarosserie befestigten oder befestigbaren Halterung (6) zum lösbaren Arretieren der Fahrzeugeinrichtung an der Kraftfahrzeugkarosserie, und mit einem Schlüsselschalter (16), der in Abhängigkeit seiner Schaltposition zumindest einen elektrischen Kontakt zwischen der Fahrzeugeinrichtung und dem Kraftfahrzeug herstellt oder unterbricht, **dadurch gekennzeichnet, dass** der Schlüsselschalter (16) an der längsverschieblich an der Halterung (6) gelagerten/lagerbaren Fahrzeugeinrichtung befestigt ist und mit einem Kontaktschlitten (24) zusammenwirkt, der längsverschieblich an der Halterung (6) gelagert ist, wobei der Schlüsselschalter (16) einen Schließzylinder (32) aufweist, der mechanisch mit einem Arretierhebel (35) verbunden und zumindest durch eine Drehbewegung des Schließzylinders (32) in Eingriff oder Außereingriff mit dem Kontaktschlitten (24) bringbar ist, wobei die Fahrzeugeinrichtung ein Führungselement (10) aufweist, an welchem der Schließzylinder (32) und der Arretierhebel (35) gelagert sind, wobei an dem Führungselement (10) und/oder an dem Arretierhebel (35) ein oder mehrere elektrische Berührungskontaktelemente (29) angeordnet und mit einer oder mehreren elektrischen Einrichtungen der Fahrzeugeinrichtung (2) elektrisch verbunden sind, wobei der Kontaktschlitten (24) ein oder mehrere Gegenberührungskontaktelemente (25) aufweist, die elektrisch mit einem Steuergerät (17) und/oder einer elektrischen Spannungsversorgung des Kraftfahrzeugs verbunden/verbindbar sind und in zumindest einer Schaltstellung des Schlüsselschalters (16) in elektrischem Berührungskontakt mit zumindest einem der Berührungskontaktelemente (29) stehen.

2. Fahrzeugeinrichtungssystem nach Anspruch 1, **dadurch gekennzeichnet, dass** die Halterung (6) eine Längsführung (9) zum Längsverschieben der Fahrzeugeinrichtung sowie eine Führungsschiene (22), die sich parallel zur Längsführung (9) erstreckt und den Kontaktschlitten (24) längsverschieblich trägt, aufweist.

3. Fahrzeugeinrichtungssystem nach einem der vorhergehenden Ansprüche, **dadurch gekennzeichnet, dass** die Führungsschiene (22) eine im Querschnitt C-förmig ausgebildete Führungsnut (21) aufweist, und dass der Kontaktschlitten (24) ein T-förmiges und in der Führungsnut (21) gehaltenes Führungsprofil (23) aufweist.

4. Fahrzeugeinrichtungssystem nach einem der vorhergehenden Ansprüche, **dadurch gekennzeichnet, dass** der Arretierhebel (35) und/oder der Schließzylinder (32) für das in Eingriff- oder außer Eingriff bringen axial - bezogen auf eine Drehachse (33) des Schließzylinders (32) - verschiebbar sind.

5. Fahrzeugeinrichtungssystem nach einem der vorhergehenden Ansprüche, **dadurch gekennzeichnet, dass** dem Kontaktschlitten (24) eine Schleppkette, ein Aufwickelsystem und/oder ein flexibles Leiterband (26) für elektrische Leiter, die die Gegenberührungskontakte mit dem Steuergerät und/oder der Spannungsversorgung verbinden, zugeordnet ist.

6. Fahrzeugeinrichtungssystem nach einem der vorhergehenden Ansprüche, **dadurch gekennzeichnet, dass** die Fahrzeugeinrichtung als Einrichtung ein Steuergerät (15), eine Sitzheizung (11) eine Sitzlüftung, eine Sitzkühlung, einen Sitzbelegungssensor, eine Gurtstraffer-Einrichtung (13), eine Sitzverstelleinrichtung, ein Gurtschloss, einen Stromanschluss, ein Unterhaltungssystem und/oder eine Airbag-Einrichtung (12) aufweist.

7. Fahrzeugeinrichtungssystem nach einem der vorhergehenden Ansprüche, **dadurch gekennzeichnet, dass** zumindest einer der Berührungskontakte (29) oder Gegenberührungskontakte (25) federnd gelagert ist.

8. Fahrzeugeinrichtungssystem nach einem der vorhergehenden Ansprüche, **dadurch gekennzeichnet, dass** das Steuergerät (17) dazu hergerichtet ist, eine erfolgte Kontaktierung der Einrichtung oder Einrichtungen der Fahrzeugeinrichtung zu erkennen.

9. Fahrzeugeinrichtungssystem nach einem der vorhergehenden Ansprüche, **dadurch gekennzeichnet, dass** der Kontaktschlitten (24) einen Mikroschalter (40) aufweist, der durch den Schlüsselschalter (16) betätigbar und mit dem Steuergerät (17) verbunden ist.

## Claims

1. Vehicle device system (1) for a motor vehicle, having at least one vehicle device - in particular, a vehicle seat (2) or vehicle table - and having a holder (6) that is or can be fastened to a vehicle body for detachably locking the vehicle device on the vehicle body, and having a key switch (16), which, depending upon its switching position, makes or breaks at least one electrical contact between the vehicle device and the motor vehicle, **characterized in that** the key switch (16) is fastened on the vehicle device which is mounted or can be mounted on the holder (6) in a longitudinally-displaceable manner and cooperates with a contact carriage (24) which is mounted in a longitudinally-displaceable manner on the holder (6), wherein the key switch (16) has a locking cylinder (32), which is mechanically connected to a locking lever (35) and at least can be brought by means of a rotary movement of the locking cylinder (32) into or out of engagement with the contact carriage (24), wherein the vehicle device has a guide element (10), on which the locking cylinder (32) and the locking lever (35) are mounted, wherein one or more electrical contact elements (29) are arranged on the guide element (10) and/or on the locking lever (35) and are connected electrically to one or more electrical devices of the vehicle device (2), wherein the contact carriage (24) has one or more contact counter-elements (25), which are or can be electrically connected to a control device (17) and/or an electrical power supply of the motor vehicle and, in at least one switching position of the key switch (16), are in electrical contact with at least one of the contact elements (29).

2. Vehicle device system according to claim 1, **characterized in that** the holder (6) has a longitudinal guide (9) for longitudinally displacing the vehicle device, and a guide rail (22) which extends in parallel to the longitudinal guide (9) and carries the contact slide (24) in a longitudinally-displaceable manner.

3. Vehicle device system according to one of the preceding claims, **characterized in that** the guide rail (22) has a guide groove (21) designed in a C-shaped cross-section, and that the contact slide (24) has a T-shaped guide profile (23) held in the guide groove (21).

4. Vehicle device system according to one of the preceding claims, **characterized in that** the locking lever (35) and/or the locking cylinder (32) can be displaced axially - relative to an axis of rotation (33) of the locking cylinder (32) - for engagement or disengagement.

5. Vehicle device system according to one of the preceding claims, **characterized in that** the contact carriage (24) is assigned a pull chain, a winding system, and/or a flexible conductor strip (26) for electrical conductors, which connect the counter-contacts to the control device and/or the voltage supply.

6. Vehicle device system according to one of the preceding claims, **characterized in that** the vehicle device has a control unit (15), a seat heater (11), seat ventilation, a seat cooling system, a seat occupancy sensor, a seatbelt tensioner device (13), a seat adjustment device, a belt buckle, a power connection, an entertainment system, and/or an airbag device (12).

7. Vehicle device system according to one of the preceding claims, **characterized in that** at least one of the contacts (29) or counter-contacts (25) is spring-mounted.

8. Vehicle device system according to one of the preceding claims, **characterized in that** the control device (17) is designed to detect a successful contact of the device or devices of the vehicle device.

9. Vehicle device system according to one of the preceding claims, **characterized in that** the contact carriage (24) has a microswitch (40) which can be actuated by the key switch (16) and is connected to the control device (17).

## Revendications

1. Système de dispositif de véhicule (1) pour un véhicule à moteur, comprenant au moins un dispositif de véhicule, en particulier un siège de véhicule (2) ou une tablette de véhicule, et un élément de retenue (6), fixé ou pouvant être fixé à une carrosserie de véhicule pour le blocage libérable du dispositif de véhicule sur la carrosserie de véhicule, et un interrupteur à clé (16), qui, en fonction de sa position de commutation, établit ou interrompt au moins un contact électrique entre le dispositif de véhicule et le véhicule à moteur, **caractérisé en ce que** l'interrupteur à clé (16) est fixé au dispositif de véhicule fixé ou pouvant être fixé sur l'élément de retenue (6) de manière à coulisser longitudinalement et coopère avec un coulisseau de contact (24), qui est monté sur l'élément de retenue (6) de manière à coulisser longitudinalement, l'interrupteur à clé (16) comportant un cylindre de fermeture (32), qui est relié mécaniquement à un levier de blocage (35) et qui peut être amené en prise ou séparé du coulisseau de contact (24) au moins par un mouvement rotatif du cylindre de fermeture (32), le dispositif de véhicule comportant un élément de guidage (10), sur lequel sont montés le cylindre de fermeture (32) et le levier de blocage (35), un ou plusieurs éléments électriques de contact par contact (29) étant disposés sur l'élément de guidage (10) et/ou sur le levier de blocage (35) et étant reliés électriquement à un ou plusieurs dispositifs électriques du dispositif de véhicule (2), le coulisseau de contact (24) comportant un ou plusieurs contre-éléments de contact par contact (25), qui sont/peuvent être reliés électriquement à un appareil de commande (17) et/ou une alimentation en courant électrique du véhicule à moteur et qui sont en contact électrique par contact avec au moins un des éléments de contact par contact (29) dans au moins une position de commutation de l'interrupteur à clé (16).

2. Système de dispositif de véhicule selon la revendication 1, **caractérisé en ce que** l'élément de retenue (6) comporte un guidage longitudinal (9) pour le coulissement longitudinal du dispositif de véhicule ainsi qu'un rail de guidage (22), qui s'étend parallèlement au guidage longitudinal (9) et qui porte, de manière à coulisser longitudinalement, le coulisseau de contact (24).

3. Système de dispositif de véhicule selon l'une quelconque des revendications précédentes, **caractérisé en ce que** le rail de guidage (22) comporte une rainure de guidage (21) réalisée à section transversale en forme de C, et **en ce que** le coulisseau de contact (24) comporte un profil de guidage (23) en forme de T et maintenu dans la rainure de guidage (21).

4. Système de dispositif de véhicule selon l'une quelconque des revendications précédentes, **caractérisé en ce que** le levier de blocage (35) et/ou le cylindre de fermeture (32) destiné à la mise en prise ou à la séparation peuvent être déplacés axialement, par rapport à un axe de rotation (33) du cylindre de fermeture (32).

5. Système de dispositif de véhicule selon l'une quelconque des revendications précédentes, **caractérisé en ce qu'**une chaîne porte-câbles, un système d'enroulement et/ou une bande conductrice flexible (26) pour conducteurs électriques, qui relient les contre-contacts par contact à l'appareil de commande et/ou à l'alimentation en courant, sont associés au coulisseau de contact (24).

6. Système de dispositif de véhicule selon l'une quelconque des revendications précédentes, **caractérisé en ce que** le dispositif de véhicule comporte, en guise de dispositif, un appareil de commande (15), un siège chauffant (11), un siège ventilé, un siège refroidissant, un capteur d'occupation de siège, un dispositif de prétensionneur de ceinture (13), un dispositif de réglage de siège, une ceinture de sécurité, un raccordement électrique, un système de divertissement et/ou un dispositif de coussin gonflable de sécurité (12).

7. Système de dispositif de véhicule selon l'une quelconque des revendications précédentes, **caractérisé en ce qu'**au moins un des contacts par contact (29) ou contre-contacts par contact (25) est monté sur ressort.

8. Système de dispositif de véhicule selon l'une quelconque des revendications précédentes, **caractérisé en ce que** l'appareil de commande (17) est configuré pour reconnaître une mise en contact effectuée du dispositif ou des dispositifs du dispositif de véhicule.

9. Système de dispositif de véhicule selon l'une quelconque des revendications précédentes, **caractérisé en ce que** le coulisseau de contact (24) comporte un microcommutateur (40), qui peut être actionné par l'interrupteur à clé (16) et qui est relié à l'appareil de commande (17).
